# EUROPÄISCHE PATENTSCHRIFT

(11) **EP 2 724 804 B1**
(45) Veröffentlichungstag und Bekanntmachung des Hinweises auf die Patenterteilung: **29.03.2017**
(21) Anmeldenummer: 12189951.2
(22) Anmeldetag: 25.10.2012
(51) Int. Cl.: B23H 3/00, B23H 11/00, B23H 7/30, B23H 9/10

(54) **Verformungsmessung bei der elektrochemischen Bearbeitung**
Deformation measurement during electrochemical machining
Mesure de la déformation lors du traitement électrochimique

(43) Veröffentlichungstag der Anmeldung: 30.04.2014
(73) Patentinhaber: MTU Aero Engines AG, 80995 München (DE)
(72) Erfinder: Huttner, Roland, 82287 Jesenwang (DE); Zielinski, Michael, 85716 Unterschleißheim (DE); Gründmayer, Jürgen, 82319 Starnberg (DE)

(56) Entgegenhaltungen:
- EP-A2- 2 011 597
- WO-A1-01/30526
- CN-A- 102 198 549
- US-A- 3 365 381
- US-A- 3 637 481
- DATABASE WPI Week 201173 Thomson Scientific, London, GB; AN 2011-N72508 XP002693760, & CN 102 198 549 A (UNIV NANJING AERONAUTICS&ASTRONAUTICS) 28. September 2011 (2011-09-28)

## Beschreibung

### HINTERGRUND DER ERFINDUNG

### GEBIET DER ERFINDUNG

Die vorliegende Erfindung betrifft ein Verfahren für eine elektrochemische Bearbeitung von Bauteilen, bei welchem in einer Vorrichtung eine Kathode in einem Abstand von dem zu bearbeitenden Bauteil angeordnet wird und in den Spalt zwischen Kathode und zu bearbeitendem Bauteil ein Elektrolyt eingebracht wird, wobei zur Bearbeitung eine elektrische Spannung zwischen Bauteil und Kathode angelegt wird.

### STAND DER TECHNIK

Elektrochemische Bearbeitungsverfahren, bei denen ein Materialabtrag an einer zu bearbeitenden Oberfläche eines Bauteils dadurch stattfindet, dass bei Anwesenheit eines Elektrolyten und einer entsprechenden elektrischen Spannung eine anodische Oxidation an der Bauteiloberfläche stattfindet, sodass Metallionen aus der Bauteiloberfläche in den Elektrolyten in Lösung gehen und somit von der Bauteiloberfläche entfernt werden, sind im Stand der Technik bekannt und werden beispielsweise zur Bearbeitung von Bauteilen von Strömungsmaschinen, wie z.B. Bauteilen von stationären Gasturbinen oder Flugtriebwerken eingesetzt. Durch die elektrische Potentialverteilung im Arbeitsspalt zwischen zu bearbeitenden Bauteil und Kathode kann der Abtrag lokal gesteuert werden, sodass insbesondere Oberflächen erzeugt werden können, die komplementär zur Topographie der Kathode ausgebildet sind.

Beim sogenannte PECM (Pulsed Elektrochemical Machining - Gepulstes Elektrochemisches Abtragen) kann die elektrische Spannung gepulst aufgebracht werden, und/oder die Kathode kann in Bezug auf das zu bearbeitende Bauteil oszillieren, sodass sich der Bearbeitungsspalt wiederholt öffnet und schließt, was für Kühl- und Spülzwecke genutzt werden kann, um verstärkt unverbrauchten Elektrolyt in den Arbeitsspalt zu bringen.

Aus der US3,637,481 B1 ist eine Vorrichtung und ein entsprechendes Verfahren für eine elektrochemische Bearbeitung von Bauteilen mit einer Bauteilaufnahme bekannt, in der das zu bearbeitende Bauteil aufgenommen werden kann und die an der Kathode oder der Kathodenhalterung eine Dehnmessanordnung aufweist.

Aus der WO 01/30526 A1 ist ein elektrochemisches Verfahren und eine entsprechende Apparatur dazu bekannt, in der u.a. eine oszillierende Kathode zum Abtransport von verunreinigtem Elektrolyt vorgestellt wird.

Da es für die elektrische Potentialverteilung im Arbeitsspalt und somit für den Materialabtrag unter anderem im Wesentlichen auf die Spaltbreite ankommt, ist es für eine exakte Bearbeitung von Oberflächen besonders wichtig, eine exakte Spaltbreite einstellen zu können.

### OFFENBARUNG DER ERFINDUNG

### AUFGABE DER ERFINDUNG

Es ist deshalb Aufgabe der vorliegenden Erfindung, elektrochemische Bearbeitungsverfahren und insbesondere das gepulste elektrochemische Abtragen dahingehend weiter zu verbessern, dass Oberflächen exakter bearbeitet und möglichst genau nach entsprechenden Vorgaben ausgebildet werden können. Dabei soll gleichzeitig eine effiziente Bearbeitung unter Verwendung einer möglichst einfach ausgebildeten Vorrichtung möglich sein.

### TECHNISCHE LÖSUNG

Diese Aufgabe wird gelöst durch ein Verfahren mit den Merkmalen des Anspruchs 1. Vorteilhafte Ausgestaltungen sind Gegenstand der abhängigen Ansprüche.

Zur Ausführung des erfindungsgemäßen Verfahrens wird vorgeschlagen, an einer elektrochemischen Bearbeitungsvorrichtung mindestens eine Dehnmesseinrichtung an der Kathode und/oder einer Kathodenhalterung vorzusehen, um bei der Bearbeitung auftretende Verformungen und/oder Krafteinleitungen erfassen zu können. Mit der Kenntnis entsprechender Belastungen können diese durch Veränderung der Betriebsparameter, wie beispielsweise des Elektrolytzu- und/oder -durchflusses, der Druckverhältnisse im Arbeitsspalt, der Vorschubgeschwindigkeit der Kathode, der Oszillation der Kathode etc., minimiert werden, um so die Bearbeitungsgenauigkeit zu erhöhen. Zusätzlich kann mit Kenntnis der Betriebsbelastungen die Elektrodenauslegung angepasst und die Elektrodenkonstruktion entsprechend der Belastung optimiert werden, sodass auch dadurch die Fertigungsgenauigkeit erhöht werden kann. Insbesondere lassen sich bei Kenntnis der auftretenden Druckbelastungen in Folge der Inkompressibilität des Elektrolyten und die dadurch entstehenden Druckschwankungen Kraftspitzen verringern bzw. vermeiden, um so Verformungen der Kathode und/oder einer Kathodenhalterung zu vermeiden, sodass ein kontinuierlicher Arbeitsspalt mit geringer Spaltbreite zuverlässig einstellbar ist und eine hohe Abbildungsgenauigkeit der Kathode auf das Werkstück erzielt werden kann.

Zur Ermittlung der Kräfte bzw. der elastischen Verformung werden Dehnmesseinrichtungen eingesetzt, die insbesondere durch Dehnmessstreifen gebildet sein können oder diese umfassen können. Die Dehnmessstreifen lassen sich in einfacher Weise an einer Kathode und/oder einer Halterung davon befestigen und liefern die erforderlichen Messwerte, die über eine geeignete Kalibrierung auch Rückschlüsse auf die auftretenden Kräfte ermöglichen.

Die Vorrichtung zur elektrochemischen Bearbeitung kann eine Auswerteeinheit zum automatischen Auswerten der Messergebnisse der Dehnmesseinrichtung aufweisen, wobei die ausgewerteten Messergebnisse bzw. daraus ermittelte Betriebsparameter einer Steuerungs- und/oder Regelungseinrichtung zur Steuerung und/oder Regelung der Vorrichtung zur elektrochemischen Bearbeitung und insbesondere einer Bewegungseinrichtung der Kathode umfassen kann.

Die Messungen der Dehnmesseinrichtungen können einzelne Messungen zu Beginn, während und/oder am Ende eines Bearbeitungsvorgangs sein oder mehrere Messungen, die über den Bearbeitungsvorgang verteilt sind. Darüber hinaus sind auch kontinuierliche Messungen während des gesamten Bearbeitungsvorgangs möglich.

Die Dehnungsmessung kann insbesondere während einer Oszillation der Kathoden erfolgen, um die Druckverhältnisse bzw. die Verformung während einer Oszillation der Kathode zu ermitteln. Die Kathode kann beispielsweise bei einer Schwingungsfrequenz von 20 Hz oder mehr, insbesondere 30 Hz oder mehr vorzugsweise mit Schwingungsamplituden von 50 µm bis 500 µm, insbesondere 100 µm bis 300 µm, bevorzugt 150 µm bis 200 µm, schwingen während eine Dehnungsmessung erfolg.

Darüber hinaus können die Dehnungsmessungen sowohl bei einer Vorschubbewegung der Kathode in Richtung des zu bearbeitenden Bauteils, als auch ohne Vorschubbewegung der Kathode durchgeführt werden.

Der Betrieb der Vorrichtung zur elektrochemischen Bearbeitung und insbesondere der Betrieb der Kathode bzw. einer Bewegungseinrichtung der Kathode, sowie eines Elektrolytzuflusses können in Abhängigkeit der Messergebnisse gesteuert oder geregelt, insbesondere automatisiert gesteuert oder geregelt werden. Damit lassen sich unmittelbare Einflüsse auf die elektrochemische Bearbeitung verringern oder gar beseitigen.

Alternativ kann die Erfassung der Belastungszustände einer Kathode und/oder einer Kathodenhalterung jedoch auch an einem Versuchsaufbau erfasst werden, um dann in die Serienbearbeitung von Bauteilen übertragen zu werden. Dies hat den Vorteil, dass einerseits die erforderlichen Messungen exakter durchführbar sind, beispielsweise indem die Messung in einem stromlosen Zustand stattfindet, und andererseits, dass der Aufwand für mehrere Bearbeitungsvorrichtungen klein gehalten werden kann, da die Messvorrichtung lediglich an einer Versuchsvorrichtung vorgesehen werden muss. Außerdem kann die Bearbeitung ohne die erforderlichen Messungen schneller und effizienter durchgeführt werden. Gleichwohl kann durch die Ermittlung der Verformungen und Belastungen an einem Versuchsaufbau der sich wiederholende Ablauf der elektrochemischen Bearbeitung von Serienbauteilen optimiert werden.

### KURZBESCHREIBUNG DER FIGUREN

Die beigefügten Zeichnungen zeigen in rein schematischer Weise in
- Fig.1: eine Schnittansicht durch einen Teil einer erfindungsgemäßen elektrochemischen Bearbeitungsvorrichtung;
- Fig.2: eine Draufsicht auf die elektrochemische Bearbeitungsvorrichtung aus Figur 1, in dem mit einem Kreis gekennzeichneten Bereich, wobei die elektrochemische Bearbeitungsvorrichtung in einer geöffneten Stellung ist; und in
- Fig.3: eine Draufsicht auf die elektrochemische Bearbeitungsvorrichtung aus Figur 1 ähnlich der Figur 2, wobei die elektrochemische Bearbeitungsvorrichtung in einer geschlossenen Stellung ist.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels deutlich. Allerdings ist die Erfindung nicht auf dieses Ausführungsbeispiel beschrankt.

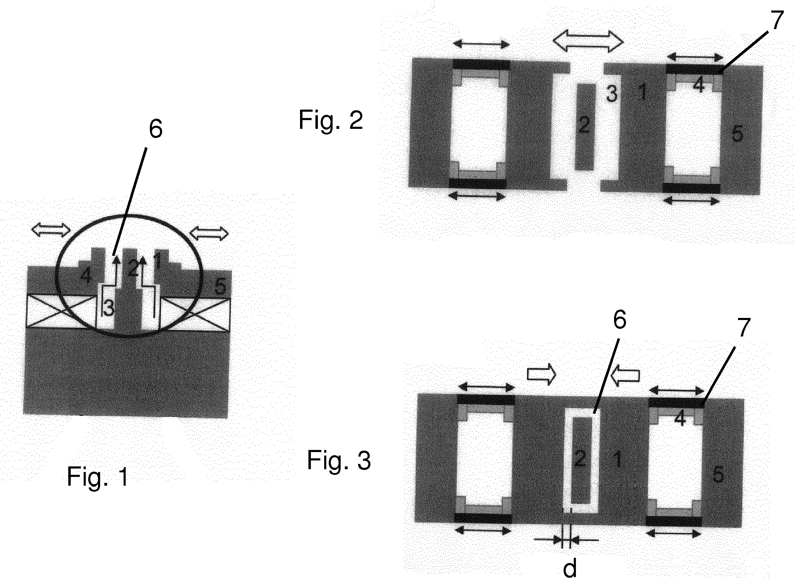

Die Figur 1 zeigt ein Ausführungsbeispiel einer erfindungsgemäßen elektrochemische Bearbeitungsvorrichtung, bei welcher ein Bauteil 2 zwischen zwei Kathoden 1 in einer Bauteilaufnahme angeordnet ist, wobei die Kathoden entsprechend der Doppelpfeile relativ zu dem zu bearbeitenden Bauteil verfahren werden können, sodass der zwischen der Kathode 1 und dem Bauteil 2 sich ausbildende Spalt 6 in seiner Spaltbreite d variierbar ist. In dem Spalt 6 wird ein Elektrolyt 3 vorgesehen, sodass beim Anlegen einer Spannung zwischen dem Bauteil 2 und der Kathode 1 eine anodische Oxidation an den Oberflächen des Bauteils 2 mit einem entsprechenden Materialabtrag stattfindet.

Um die Kathoden 1 bewegen zu können, sind sie jeweils auf einem Schlitten 5 angeordnet, der verfahrbar auf einem Maschinensockel gelagert isk.

In den Figuren 2 und 3 sind Draufsichten auf die elektrochemische Bearbeitungsvorrichtung aus Figur 1 gezeigt, wobei in Figur 2 ein Zustand gezeigt ist, in dem die Kathoden 1 auseinander gefahren sind, um eine große Spaltbreite d zu realisieren, während in dem Zustand, der in Figur 3 gezeigt ist, die Kathoden 1 aufeinander zu und in Richtung des Bauteils 2 verfahren sind, sodass eine kleine Spaltbreite d eingestellt ist. Für die Bewegung der Kathoden 1 relativ zum zu bearbeitenden Bauteil 2 ist eine Bewegungseinrichtung vorgesehen, die im gezeigten Ausführungsbeispiel Schlitten 5 umfasst, mit denen die Kathoden 1 relativ zu einer Bauteilaufnahme und somit zum zu bearbeitenden Bauteil verfahren werden können. Die Kathoden 1 sind über Halterungen 4 an den Schlitten 5 angeordnet.

Bei der elektrochemischen Bearbeitung können die Kathoden 1 kontinuierlich in Richtung des Bauteils 2 bewegt werden, um den Spalt 6 kontinuierlich zu verkleinern und den Abtrag an den zu bearbeitenden Oberflächen voranzutreiben. Üblicherweise kann die Spaltbreite bis auf einen Wert von 30 µm verringert werden.

Durch die Spaltbreite wird der Verlauf des elektrischen Potentials beeinflusst und der Abtrag an den zu bearbeitenden Oberflächen des Bauteils 2 wird komplementär zur Form der Kathoden 1 erfolgen, sodass gewünschte Oberflächenformen herstellbar sind.

Darüber hinaus kann ein gepulster Betrieb vorgesehen werden, bei dem die Kathoden 1 in einer Hin - und Her - Bewegung schwingen, beispielsweise mit einer Frequenz von 30 Hz, sodass der Abstand zwischen dem Bauteil 2 und den Kathoden 1 wiederholt vergrößert und verkleinert wird, was die Zufuhr von frischem Elektrolyt 3 verbessert.

Sowohl bei einem kontinuierlichen Verfahren der Kathoden 1 in Richtung des Bauteils, als auch bei einer stationären oder einer Vorschubbewegung überlagerten oszillierenden Bewegung der Kathoden 1 wird durch den im Spalt 6 vorgesehenen Elektrolyten sowie durch das Nachpumpen des Elektrolyten 3 in den Bearbeitungsspalt 6 eine Kraftkomponente auf die Kathoden 1 ausgeübt, die zu einer elastischen Verformung der Kathoden führen kann. Darüber hinaus können im Elektrolyt Druckschwankungen oder Kavitäten, wie beispielsweise Blasen, erzeugt werden, die einen Einfluss auf den Materialabtrag beim Bauteil haben können.

Um bei den gegebenen Betriebsbedingungen, wie Vorschubgeschwindigkeit der Kathoden 1 in Richtung des zu bearbeitenden Bauteils 2 und/oder Oszillation der Kathoden 1 während der Bearbeitung mit und ohne Überlagerung durch einen zusätzlichen Vorschub sowie dem gegebenen Elektrolyten und dessen Pumpbedingungen feststellen zu können, wie sich die Kathoden 1 oder die entsprechenden Halterungen 4, mit denen sie jeweils an den Schlitten 5 angeordnet sind, verändern, sind bei dem gezeigten Ausführungsbeispiel im Bereich der Halterungen 4, mit denen die Kathoden an dem Schlitten 5 befestigt sind, Dehnmessstreifen 7 angeordnet, durch die entsprechende Belastungen der Kathoden 1 bzw. der Halterungen 4 ermittelbar sind.

Mit den gewonnen Kenntnissen über mögliche elastische Verformungen der Kathoden und/oder Druckschwankungen im Elektrolyten kann das Bearbeitungsverfahren optimiert werden, um eine exakte Bearbeitung der zu bearbeitenden Oberflächen zu ermöglichen. So kann mit den Messergebnissen, die durch die Messung mittels der Dehnmessstreifen vorliegen, die Vorschubgeschwindigkeit der Kathoden und/oder deren Oszillation genauso eingestellt werden, wie der Durchfluss des Elektrolyten durch den Arbeitsspalt 6.

Insbesondere kann eine nicht näher dargestellte, informationstechnische Auswerteeinheit vorgesehen sein, welche die Messergebnisse der Dehnmessstreifen 7 empfängt und aus den Messergebnissen sowie den bekannten Angaben zum Betrieb der elektrochemischen Bearbeitungsvorrichtung automatisiert veränderte Betriebsparameter ermittelt.

Darüber hinaus kann eine Steuerungseinrichtung vorgesehen sein, welche die von der Auswerteeinheit ermittelten Betriebsparameter erfasst und den Betrieb der elektrochemischen Bearbeitungsvorrichtung entsprechend der empfangenen Betriebsparameter steuert.

Sofern kontinuierlich oder wiederholt Messungen mittels der Dehnmessstreifen 7 stattfinden, können die Messergebnisse sowie die daraus in der Auswerteeinheit gewonnen Betriebsparameter kontinuierlich oder wiederholt angepasst werden, sodass sich durch die Rückkoppelung eine Regelung für den Betrieb der elektrochemischen Bearbeitungsvorrichtung ergibt.

Allerdings ist es auch möglich, lediglich nur eine einzige Messung mittels der Dehmesseinrichtung vorzunehmen, um beispielsweise lediglich den Einfluss des Elektrolytdurchflusses zu berücksichtigen. Eine entsprechende Einzelmessung kann somit zu Beginn der Bearbeitung, also wenn die Kathoden 1 in einem ersten Abstand von dem zu bearbeitenden Bauteil angeordnet sind, durchgeführt werden, oder zum Ende der Bearbeitung, wenn die Elektroden ihre Endbearbeitungsposition in Bezug auf das zu bearbeitenden Bauteil 2 erreicht haben und einen zweiten Abstand, der kleiner ist als der erste Abstand zum Bauteil einnehmen. Darüber hinaus sind Messungen auch in einem Zwischenbereich denkbar und vorteilhafterweise können die Dehnmessungen kontinuierlich während eines gesamten Bearbeitungszyklus durchgeführt werden.

Allerdings ist es für exakte Messbedingungen vorteilhaft, die Messungen im stromlosen Zustand durchzuführen, sodass die Messung durch die angelegte elektrische Spannung nicht beeinflusst wird.

Aus diesem Grund kann es auch vorteilhaft sein, wenn die Messung lediglich an einem Versuchsaufbau in Form einer Testmessung erfolgt, während bei der Serienbearbeitung auf die Ergebnisse der Testmessung zurückgegriffen wird. Folglich müssen das Versuchsbauteil sowie die Versuchskathoden und der Elektrolyt möglichst so eingesetzt werden, wie dies bei der entsprechenden Serienbearbeitung auch stattfindet.

Um Rückschlüsse aus den Messungen der Dehnung und somit der elastischen Verformung der Kathoden 1 und/oder Halterungen 4 auf die Kraft - und Druckverhältnisse vornehmen zu können, können die Dehnmesseinrichtungen, also im vorliegenden Fall die Dehnmessstreifen kalibriert werden, indem auf die Kathoden 1 und/oder die Halterungen 4 definierte Kräfte aufgebracht werden und die ermittelte Dehnung entsprechend erfasst wird. Mit den so ermittelten Werten lässt sich dann bei der Durchführung der Dehnungsmessungen während der elektrochemischen Bearbeitung bestimmen, welche Kräfte auf die Kathoden 1 und/oder die Halterungen 4 während des Verlaufs der elektrochemischen Bearbeitung einwirken.

Mit diesen Erkenntnissen lassen sich die Betriebsparameter besser einstellen und die Kathoden sowie die Halterungen derselben konstruktiv anpassen, um exaktere Bearbeitungen von Oberflächen durchführen, da Fehlerquellen durch Verformungen und auftretende Kräfte verringert werden können.

Obwohl die vorliegende Erfindung anhand eines Ausführungsbeispiels detailliert beschrieben worden ist, ist für den Fachmann klar, dass die Erfindung nicht auf dieses Ausführungsbeispiel beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird. Die vorliegende Offenbarung umschließt sämtliche Kombinationen aller vorgestellter Einzelmerkmale mit ein.

## Patentansprüche

1. Verfahren zur elektrochemischen Bearbeitung von Bauteilen bei welchem eine Kathode (1) in einem Abstand von dem zu bearbeitenden Bauteil (2) angeordnet wird und in den Spalt (6) zwischen Kathode und zu bearbeitendem Bauteil ein Elektrolyt (3) eingebracht wird,
wobei
- eine oder mehrere Messungen einer elastischen Verformung der Kathode (1) und/oder einer Halterung (4), an der die Kathode angeordnet ist, durchgeführt werden, **dadurch gekennzeichnet, dass**
- die Messung jeweils in einem stromlosen Zustand durchgeführt wird.

2. Verfahren nach Anspruch 1, **dadurch gekennzeichnet, dass** der Abstand von einem ersten Abstand zu einem zweiten Abstand, der kleiner ist als der erste Abstand, verringert wird, wobei in dem Zeitraum der relativen Bewegung von Kathode (1) und Bauteil (2) vom erstem Abstand zum zweitem Abstand oder in einer Position der Kathode zwischen erstem und zweitem Abstand die Messung der elastischen Verformung durchgeführt wird.

3. Verfahren nach einem der Ansprüche 1 oder 2, **dadurch gekennzeichnet, dass** die Messung der elastischen Verformung ohne Vorschubbewegung der Kathode (1) in Richtung des zweiten Abstands durchgeführt wird.

4. Verfahren nach einem der Ansprüche 1 bis 3, **dadurch gekennzeichnet, dass**
- die Messung der elastischen Verformung in einem Test erfolgt und Ergebnisse der Testmessung auf den Betrieb einer Kathode im Arbeitseinsatz übertragen werden,
- der Betrieb der Kathode und/oder die Vorschubbewegung der Kathode von dem ersten Abstand zum zweiten Abstand und/oder der Elektrolytzufluss in Abhängigkeit von der Messung der elastischen Verformung automatisiert gesteuert oder geregelt wird
- und eine Dehnmesseinrichtung (7) vor einer Messung der elastischen Verformung durch definierte Verformung der Kathode und/oder ihrer Halterung kalibriert wird.

5. Verwendung einer Vorrichtung für die elektrochemische Bearbeitung von Bauteilen (2) mit einer Bauteilaufnahme, in der das zu bearbeitende Bauteil aufgenommen werden kann, und mindestens einer Kathode (1) mit einer Kathodenhalterung (4) und einer Bewegungseinrichtung (5), wobei die Kathode über die Kathodenhalterung an der Bewegungseinrichtung angeordnet ist und mit der Bewegungseinrichtung relativ zur Bauteilaufnahme bewegbar ist, mindestens umfassend
- einen Dehnmessstreifen oder einen Dehnmessstreifen als Dehnmesseinrichtung (7), welcher an der Kathode und/oder der Kathodenhalterung angeordnet ist;
- eine automatisierte Auswerteeinheit zur automatischen Auswertung der Messergebnisse;
- eine Steuerungs- und/oder Regelungseinrichtung zur Steuerung und Regelung der Vorrichtung zur elektrochemischen Bearbeitung;
- eine Schwingungseinrichtung zur Oszillation der Kathode
in einem Verfahren gemäß einem der Ansprüche 1 bis 4.

## Claims

1. A method for electrochemical processing of components,
in which a cathode (1) is disposed at a distance from a component (2) to be processed, and an electrolyte (3) is introduced into the gap (6) between the cathode and the component to be processed,
wherein
- one or more measurements of an elastic deformation of the cathode (1) and/or of a holder (4) on which the cathode is disposed are carried out, **characterized in that**
- the measurement is carried out in a current-free state.

2. The method according to claim 1,
**characterized in that**
the distance from a first distance to a second distance, which is smaller than the first distance, is reduced, wherein measurement of the elastic deformation is carried out during the time period of the relative movement of cathode (1) and component (2) from the first distance to the second distance or in a position of the cathode between the first and the second distance.

3. The method according to one of claims 1 or 2,
**characterized in that**
measurement of the elastic deformation is carried out without an advancing movement of the cathode (1) in the direction of the second distance.

4. The method according to one of claims 1 to 3,
**characterized in that**
- measurement of the elastic deformation takes place during a test, and results of the test measurement are transferred to operation of a cathode during working use,
- operation of the cathode and/or the advancing movement of the cathode from a first distance to the second distance and/or the electrolyte inflow is/are automatically controlled or regulated as a function of the measurement of the elastic deformation,
- and a strain gauge device (7) is calibrated before a measurement of the elastic deformation of the cathode and/or of its holder.

5. Use of an apparatus for electrochemical processing of components (2), having a component mounting in which the component to be processed is mounted, and having at least one cathode (1) having a cathode holder (4) and a movement device (5), wherein the cathode is disposed on the movement device by way of the cathode holder and can be moved relative to the component mounting, using the movement device, comprising
- a strain gauge or a strain gauge as a strain gauge device (7) that is disposed on the cathode and/or on the cathode holder;
- an automated evaluation unit for automatic evaluation of the measurement results;
- a control device and/or regulation device for control and regulation of the apparatus for electrochemical processing;
- an oscillation device for oscillation of the cathode
in a method according to one of claims 1 to 4.

## Revendications

1. Procédé pour le traitement électrochimique des composants dans lequel une cathode (1) est disposée à une certaine distance de la pièce (2) à usiner et dans l'interstice (6) entre la cathode et la pièce à usiner, un électrolyte (3) est introduit dans lequel :
- une ou plusieurs mesures d'une déformation élastique de la cathode (1) et/ou d'un support (4), sur lequel la cathode est agencée, sont effectuées, **caractérisé en ce que**
- la mesure est effectuée dans un état désexcité dans chaque cas.

2. Procédé selon la revendication 1,
**caractérisé en ce que**
la distance d'une première distance par rapport à une seconde distance, qui est plus petite que la première distance, est réduite, dans lequel la mesure de la déformation élastique est effectuée dans la période du mouvement relatif de la cathode (1) et de la pièce (2), par la première distance par rapport à la seconde distance ou dans une position de la cathode entre la première et la seconde distance.

3. Procédé selon l'une quelconque des revendications 1 ou 2,
**caractérisé en ce que**
la mesure de la déformation élastique est effectuée sans mouvement d'avance de la cathode (1) dans la direction de la seconde distance.

4. Procédé selon l'une quelconque des revendications 1 à 3,
**caractérisé en ce que**
- la mesure de la déformation élastique s'effectue lors d'un test et les résultats de l'évaluation du test sur le fonctionnement d'une cathode sont transmis au cours des opérations de travail,
- le fonctionnement de la cathode et/ou le mouvement d'avance de la cathode est commandé de manière automatisée ou réglé par la première distance par rapport à la seconde distance et/ou l'afflux d'électrolyte en fonction de la mesure de la déformation élastique,
- et un dispositif de mesure d'extension (7) est calibré avant une mesure de la déformation élastique au moyen d'une déformation définie de la cathode et/ou de son support.

5. Utilisation d'un dispositif pour l'usinage électrochimique des pièces (2) comportant un récepteur de composant dans lequel le composant à traiter peut être accueilli, et au moins une cathode (1) avec un porte-cathode (4) et un dispositif de déplacement (5), dans lequel la cathode, par l'intermédiaire du support de cathode, est disposé sur le dispositif de déplacement et est mobile avec le dispositif de déplacement par rapport au récepteur de composants, comprenant au moins
- une jauge de contrainte ou une jauge de contrainte en tant que dispositif de mesure d'extension (7) qui est disposé sur la cathode et/ou le support de cathode,
- une unité d'évaluation automatisée pour une évaluation automatique des résultats de mesure ;
- un dispositif de contrôle et/ou de régulation pour le contrôle et la régulation du dispositif pour l'usinage électrochimique;
- un dispositif de vibration pour faire osciller la cathode
dans un procédé selon l'une quelconque des revendications 1 à 4.
